# EUROPÄISCHE PATENTSCHRIFT

(11) **EP 0 899 292 B1**
(45) Veröffentlichungstag und Bekanntmachung des Hinweises auf die Patenterteilung: **17.01.2001**
(21) Anmeldenummer: 98115915.5
(22) Anmeldetag: 24.08.1998
(51) Int. Cl.: C08J 11/24, C08G 18/28

(54) **Verfahren zur Verringerung des Amingehalts von Recyclatpolyolen**
Process for reducing the amine content of recyclate polyols
Procédé pour la réduction de la teneur en amine de polyols de recyclage

(30) Priorität: 26.08.1997 DE 19737184
(43) Veröffentlichungstag der Anmeldung: 03.03.1999
(73) Patentinhaber: BASF AKTIENGESELLSCHAFT, 67056 Ludwigshafen (DE)
(72) Erfinder: Naber, Bernhard, 01987 Schwarzheide (DE); Gassan, Michael, 01968 Senftenberg (DE); Schupp, Thomas, Dr., 67269 Grünstadt (DE); Chakrabarti, Sarbananda, 68169 Mannheim (DE)
(74) Vertreter: Isenbruck, Günter, Dr.

(56) Entgegenhaltungen:
- EP-A- 0 601 596
- DE-A- 4 445 890

## Beschreibung

Die Erfindung betrifft ein Verfahren zur Verringerung des Gehalts einer mindestens ein Polyol enthaltenden Zusammensetzung an primären Aminen (Deaminierung), bei dem die mindestens ein Polyol enthaltende Zusammensetzung mit mindestens einem Isocyanat versetzt wird, das ausschließlich sekundäre und/oder tertiäre, aliphatisch gebundene Isocyanatgruppen aufweist. Weiterhin betrifft die Erfindung die Verwendung solcher Isocyanate zur Verringerung des Gehalts einer mindestens ein Polyol enthaltenden Zusammensetzung an primären Aminen (Deaminierung).

Im Rahmen der Suche nach Möglichkeiten einer rohstofflichen Verwertung von polymeren Kunststoffprodukten, insbesondere von Polyadditionspolymeren, hat sich besonders im Bereich der Polyurethane bzw. polyurethanhaltigen Kunststoffe die glykolytische Spaltung der polyurethanhaltigen Systeme bereits bewährt. Das Ziel dieses Verfahrens liegt darin, Polyurethane und/oder Polyharnstoffpolyurethane durch Umsetzung mit mindestens zwei OH-Gruppen enthaltenden Verbindungen unter Verringerung des Molekulargewichts in flüssige, OH-Gruppen aufweisende Produkte umzuwandeln. Für diese OH-gruppenhaltigen Produkte hat sich, da sie aus einem Wiederaufarbeitungsschritt von bereits benutzten Kunststoffprodukten oder Produktionsabfällen erhalten werden, in Fachkreisen das Wort "Recyclatpolyole" eingebürgert. Die Recyclatpolyole können beispielsweise wieder zur Herstellung von Polyurethanwerkstoffen eingesetzt werden, insbesondere zur Herstellung von harten PUR-Schaumstoffen, aber auch von Vergußmassen.

Verfahren zur glykolytischen Spaltung von polyurethanhaltigen Kunststoffen sind bereits seit langem bekannt. Häufig wird in der Literatur anstelle des Begriffs "glykolytische Spaltung" der Begriff "Glykolyse" benutzt. Dieser Begriff ist nicht mit dem gleichnamigen biochemischen Abbau der körpereigenen Reservestoffe Glykogen oder Stärke im menschlichen oder tierischen Körper zu verwechseln, wie er beispielsweise in einschlägigen Werken (siehe z. B. Römpp Lexikon Chemie, 10. Auflage, S. 1579) beschrieben ist. Im Rahmen des vorliegenden Textes wird daher aus Gründen der Eindeutigkeit der Begriff "glykolytische Spaltung" benutzt.

Unter "glykolytischer Spaltung" wird im Rahmen des vorliegenden Textes ein Verfahren verstanden, bei dem ein polymerer Kunststoff unter Zuhilfenahme eines mindestens zweiwertigen Alkohols unter Verringerung des Molekulargewichts gespalten wird.

Die heute bekannten Methoden der glykolytischen Spaltung unterscheiden sich durch die eingesetzten Glykole, Katalysatoren und Reaktionsbedingungen, wobei die Glykole gewöhnlich in großem stöchiometrischen Überschuß eingesetzt werden. Bei den bekannten Verfahren zur glykolytischen Spaltung entstehen beispielsweise durch den Wassergehalt der Glykole oder durch die glykolytische Spaltung von Harnstoffgruppen auch die den ursprünglich zur Herstellung des Polyurethans eingesetzten Isocyanaten zugrundeliegenden Amine. Das Vorliegen dieser in der Regel primären Amine wirkt sich auf die Verarbeitungseigenschaften der durch die glykolytische Spaltung entstehenden mindestens ein Polyol enthaltenden Zusammensetzung nachteilig aus. Beispielsweise katalysieren die in der mindestens ein Polyol enthaltenden Zusammensetzung vorliegenden Amine eine spätere Umsetzung mit Isocyanaten zu Polyurethanen, so daß das Erreichen ausreichend langer Verarbeitungszeiten in der Regel nicht möglich ist. Weiterhin beeinflussen die aus Aminen und Isocyanaten entstehenden Harnstoffverbindungen die Materialeigenschaften des aus der mindestens ein Polyol enthaltenden Zusammensetzung und Isocyanaten resultierenden Polyurethans meist nachteilig. Ein weiterer Gesichtspunkt, der die Anwesenheit von primären Aminen in der durch glykolytische Spaltung erhaltenen mindestens ein Polyol enthaltenden Zusammensetzung nachteilig erscheinen läßt, ist in den meist toxischen Eigenschaften der vorliegenden Amine zu finden. Da Polyurethane in der Regel wenigstens anteilig unter Verwendung aromatischer Isocyanatverbindungen hergestellt werden, entstehen bei der glykolytischen Spaltung primäre aromatische Amine, deren cancerogenes, teratogenes und zum Teil mutagenes Potential hinreichend bekannt ist.

Es hat daher nicht an Versuchen gefehlt, die in einer Polyolzubereitung vorliegenden Amine durch Umsetzung mit gegenüber Aminen reaktiven Verbindungen zu im Sinne des oben Gesagten "unschädlichen" Verbindungen umzuwandeln. Dieses Verfahren wird im weiteren Verlauf des Textes unter dem Oberbegriff "Deaminierung" zusammengefaßt.

So wird beispielsweise in der DE-A 195 19 333 vorgeschlagen, die Deaminierung durch Zugabe von Kohlensäureestern zu erreichen. Nachteilig bei diesem Verfahren wirkt sich die geringe Selektivität der Kohlensäureester in Bezug auf OH-Gruppen und Aminogruppen aus, weshalb zum Abfangen einer möglichst großen Zahl von Aminogruppen eine große Menge an Kohlensäureestern eingesetzt werden muß. Dies stellt zum einen die Wirtschaftlichkeit des Verfahrens in Frage, zum anderen ergibt sich in der Regel nur eine mindere Produktqualität, wenn aus solchen Polyolzubereitungen nach der Deaminierung Polyurethane hergestellt werden.

Die DE-A 44 42 379 schlägt vor, die glykolytische Spaltung unter schonenden Bedingungen mit einem sehr großen Überschuß an OH-Gruppen tragenden Verbindungen durchzuführen. Hierzu wird der zu zerlegende polyurethanhaltige Kunststoff mit einem Polyol versetzt und in einer hochtourig laufenden, zwischen Rotor und Stator hohe Scherkräfte erzeugenden Mischund Zerkleinerungspumpe vermischt und zerkleinert. Nachteilig wirkt sich bei diesem Verfahren aus, daß auf diese Weise nur eine äußerst geringe Recyclingrate zu erzielen ist, da dem polyurethanhaltigen Kunststoff große Mengen an Polyol zugesetzt werden müssen.

Der Vorschlag, polyurethanhaltige Kunststoffe durch organische Säuren zu spalten, führt zu weitgehend aminfreien Produkten. Diese sind aber entweder zur Herstellung neuer Polyurethankunststoffe völlig ungeeignet, oder sie haben sehr hohe Viskositäten und/oder Säurezahlen (siehe z. B. DE-A-195 12 778), was die weitere Verarbeitung ebenfalls erschwert und in der Regel nur zu minderwertigen Produkten führt.

Die DE-A-44 27 250 beschreibt den Einsatz cyclischer Carbonate als Deaminierungsmittel für aus polyurethanhaltigen Kunststoffen erhältliche Polyolzubereitungen. Nachteilig bei diesem Verfahren ist der unangenehme Geruch der entstehenden Produkte und die geringe Selektivität des zur Deaminierung eingesetzten cyclischen Carbonats gegenüber OH-Gruppen und Aminogruppen. Ebenfalls problematisch beim Einsatz von Carbonaten ist die in der Regel mit der Deaminierung einhergehende Viskositätserhöhung.

In der DE-A-42 34 335 wird vorgeschlagen, die Deaminierung mittels Glycidethern vorzunehmen. Diese an sich erfolgreiche Methode weist jedoch den Nachteil auf, daß die Glycidether in sehr hohem Überschuß eingesetzt werden müssen, da ebenfalls eine mangelnde Selektivität in Bezug auf Aminogruppen und OH-Gruppen besteht.

Aufgrund der bekanntermaßen hohen Reaktivität von Isocyanatgruppen gegenüber OH-Gruppen wurde bislang nicht erfolgreich versucht, zur Deaminierung einer mindestens ein Polyol enthaltenden Zusammensetzung ein Isocyanat einzusetzen.

Andererseits wäre es jedoch wünschenswert, die Deaminierung der mindestens ein Polyol enthaltenden Zusammensetzung mit Isocyanaten durchzuführen, da die aus der Deaminierung entstehende Polyolzubereitung in der Regel nachfolgend sowieso zu Polyurethanen verarbeitet wird und dadurch keine Kompatibilitätsprobleme zwischen den durch die Deaminierung erzeugten Verbindungen und den Urethangruppen im Polyurethan entstehen würden.

Ausgehend vom Stand der Technik lag der Erfindung damit die Aufgabe zugrunde, ein Verfahren zur Verringerung des Gehalts einer mindestens ein Polyol enthaltenden Zusammensetzung an primären Aminen (Deaminierung) zur Verfügung zu stellen, wobei die Deaminierung mittels Isocyanaten vorgenommen wird, deren Selektivität hauptsächlich zu einer Reaktion mit den Aminogruppen der in der mindestens ein Polyol enthaltenden Zusammensetzung vorliegenden primären Amine führt und bei denen eine Reaktion mit den OH-Gruppen in der mindestens ein Polyol enthaltenden Zusammensetzung wenigstens weitgehend zurückgedrängt wird.

Eine weitere Aufgabe der Erfindung bestand darin, ein Verfahren zur Deaminierung einer mindestens ein Polyol enthaltenden Zusammensetzung zur Verfügung zu stellen, das die Viskosität der mindestens ein Polyol enthaltenden Zusammensetzung nicht wesentlich erhöht und damit eine Polyolzubereitung mit guter Verarbeitbarkeit ergibt.

Es war weiterhin Aufgabe der vorliegenden Erfindung, ein Verfahren zur Verfügung zu stellen, das es erlaubt, den Gehalt einer mindestens ein Polyol enthaltenden Zusammensetzung an primären Aminen auf weniger als 0,2, vorzugsweise weniger als 0,1 Gew.-% zu reduzieren.

Weiterhin bestand die Aufgabe der Erfindung darin, ein Verfahren zur Herstellung von Polyolzubereitungen aus polyurethanhaltigen Kunststoffen zur Verfügung zu stellen, das einen Deaminierungsschritt einer mindestens ein Polyol enthaltenden Zusammensetzung beinhaltet, wobei der Deaminierungsschritt die o.g. Vorteile gegenüber dem Stand der Technik aufweist.

Gegenstand der Erfindung ist damit ein Verfahren zur Verringerung des Gehalts einer mindestens ein Polyol enthaltenden Zusammensetzung an primären Aminen, bei dem eine mindestens ein Polyol enthaltende Zusammensetzung mit mindestens einem Isocyanat versetzt wird, das ausschließlich sekundäre oder tertiäre oder sekundäre und tertiäre, aliphatisch gebundene Isocyanatgruppen aufweist, wobei Isocyanat in einer Menge von bis zu 5 Gew.-%, bezogen auf die gesamte Zusammensetzung, zugegeben wird und eine Polyolzubereitung erhalten wird.

Unter einer. "Polyolzubereitung" wird im Rahmen des vorliegenden Textes jede Zubereitung verstanden, die wenigstens teilweise einen mehrwertigen Alkohol (Polyol) oder ein Gemisch aus zwei oder mehr verschiedenen mehrwertigen Alkoholen enthält, und gemäß dem erfindungsgemäßen Verfahren deaminiert wurde. Es ist dabei unerheblich, ob diese Zubereitung infolge einer chemischen Reaktion entstanden ist oder durch physikalisches Mischen einzelner Komponenten oder durch beide Vorgänge gleichzeitig. Es ist ebenso für die Durchführung des erfindungsgemäßen Verfahrens unerheblich, auf welche Weise die Amine in die Polyolzubereitung gelangt sind.

Unter einer "mindestens ein Polyol enthaltenden Zusammensetzung" wird eine aminhaltige Zusammensetzung verstanden, die mindestens einen mehrwertiger Alkohol (Polyol) oder ein Gemisch aus zwei oder mehr mehrwertigen Alkoholen enthält.

Vorzugsweise handelt es sich bei der im Rahmen des erfindungsgemäßen Verfahrens eingesetzten "mindestens ein Polyol enthaltenden Zusammensetzung" um aminhaltige Recyclatpolyole, wie sie aus der glykolytischen Spaltung von polyurethanhaltigen Kunststoffen erhältlich sind.

Als "polyurethanhaltige Kunststoffe" werden im Rahmen der vorliegenden Erfindung alle Kunststoffe bezeichnet, die wenigstens anteilig eine polymere Verbindung enthalten, die wenigstens eine Urethanbindung enthält. Hierunter fallen beispielsweise die aus Polyolen und Polyisocyanaten erhältlichen Polyurethane und die Polyharnstoffpolyurethane.

Die zur glykolytischen Spaltung eingesetzten polyurethanhaltigen Kunststoffe können beispielsweise mineralische Fasern, Glasfasern, synthetische textile Fasern, insbesondere auf der Basis von Polyestern oder Polyamiden oder Polyestern und Polyamiden enthalten, ohne daß die glykolytische Spaltung gestört wird. Ebenfalls können in den polyurethanhaltigen Kunststoffen Polymere enthalten sein, wie sie beispielsweise durch Polymerisation ethylenisch ungesättigter Monomerer erhältlich sind. Hierzu zählen beispielsweise Polyacrylnitril, Copolymere aus Polystyrol/Acrylnitril, Acrylnitril/Butadien/Styrol und andere Polymere, die durch die Verwendung von Polymerpolyolen (Graft-Polyols) in das Polyurethan eingetragen werden.

Zur Durchführung der glykolytischen Spaltung werden die polyurethanhaltigen Kunststoffe mit kurzkettigen Polyolen, d.h., mindestens zwei OH-Gruppen aufweisenden Verbindungen, ggf. in Gegenwart von Katalysatoren, versetzt. Die kurzkettigen Polyole enthalten üblicherweise zwei oder drei OH-Gruppen und in der Regel nicht mehr als etwa 20 C-Atome, vorzugsweise 2 bis etwa 8 C-Atome, die durch Heteroatome, vorzugsweise durch Sauerstoffatome getrennt sein können.

Besonders geeignet sind Ethylenglykol, Oligoethylenglykole, Propylenglykol, Oligopropylenglykole, Butandiole, Neopentylglykol, Diethanolamin, Methyldiethanolamin und Triethanolamin. Besonders bevorzugt werden Diethylenglykol, Triethylenglykol, Dipropylenglykol, Tripropylenglykol oder Mischungen aus zwei oder mehr davon eingesetzt. Als Katalysatoren werden in der Regel Titanate, Stannate oder Antimonate oder Gemische aus zwei oder mehr davon eingesetzt.

Das Mischungsverhältnis der polyurethanhaltigen Kunststoffe zu den OH-gruppenhaltigen, kurzkettigen Verbindungen ist in der Regel von der chemischen Struktur des eingesetzten polyurethanhaltigen Kunststoffs sowie von der OH-Zahl der eingesetzten OH-gruppenhaltigen kurzkettigen Verbindung abhängig. Es liegt in der Regel zwischen etwa 0,5:1 und etwa 3:1 Gew.-Teilen polyurethanhaltigem Kunststoff zu OH-Gruppen enthaltender, kurzkettiger Verbindung.

Die bei der glykolytischen Spaltung herrschende Reaktionstemperatur wird üblicherweise auf etwa 180°C bis etwa 250°C, vorzugsweise auf etwa 200°C bis etwa 235°C eingestellt. Die Reaktionszeit liegt, in Abhängigkeit von der Vernetzungsdichte des eingesetzten polyurethanhaltigen Kunststoffs, im allgemeinen bei etwa ein bis etwa zwölf Stunden, vorzugsweise etwa zwei bis etwa fünf Stunden. Es spielt für die Anwendung des erfindungsgemäßen Verfahrens keine Rolle, welche Art von Polyurethan im polyurethanhaltigen Kunststoff vorliegt. Beispiele für im Rahmen des erfindungsgemäßen Verfahrens behandelbare Polyurethane sind Polyesterpolyurethane und Polyetherpolyurethane.

Nach Abschluß der glykolytischen Spaltung des polyurethanhaltigen Kunststoffs wird die aminhaltige, mindestens ein Polyol enthaltende Zusammensetzung in der Regel zunächst auf eine Temperatur von höchstens etwa 100°C abgekühlt.

Ebenfalls Gegenstand der Erfindung ist damit ein Verfahren zur Herstellung einer Polyolzubereitung aus einem polyurethanhaltigem Kunststoff, bei dem ein polyurethanhaltiger Kunststoff mit einem Polyol oder einem Gemisch aus zwei oder mehr Polyolen versetzt und bei einer Temperatur von etwa 180°C bis etwa 250°C, gegebenenfalls in Gegenwart eines Katalysators zu einer aminhaltigen mindestens ein Polyol enthaltenden Zusammensetzung umgesetzt und nach einer Reaktionszeit von etwa 0,5 bis etwa 12h auf eine Temperatur von etwa 20 bis etwa 80°C abgekühlt wird, dadurch gekennzeichnet, daß anschließend die aminhaltige, mindestens ein Polyol enthaltende Zusammensetzung mit mindestens einem Isocyanat versetzt wird, das ausschließlich sekundäre oder tertiäre oder sekundäre und tertiäre, aliphatisch gebundene Isocyanatgruppen aufweist, wobei das mindestens eine Isocyanat in einer Menge von bis zu 5 Gew.-% zugegeben wird und eine Polyolzubereitung erhalten wird.

Idealerweise erfolgt die erfindungsgemäße Zugabe des mindestens einen Isocyanats innerhalb eines Temperaturbereichs von etwa 10°C bis etwa 80°C, bevorzugt bei etwa 20°C bis etwa 60°C und besonders bevorzugt bei etwa 25°C bis etwa 50°C.

Die Zugabe des mindestens einen Isocyanats kann chargenweise erfolgen, es kann jedoch auch die gesamte Menge an Isocyanat auf einmal zugegeben werden. Idealerweise wird während der Zugabe des mindestens einen Isocyanats gerührt. Nach Beendigung der Zugabe wird noch etwa 10 bis 180 min weitergerührt.

Das mindestens eine Isocyanat wird, bezogen auf die aminhaltige mindestens ein Polyol enthaltende Zusammensetzung in einer Menge von bis zu etwa 10 Gew.-%, vorzugsweise in einer Menge von etwa 0,1 bis etwa 5 Gew.-% und besonders bevorzugt in einer Menge von etwa 0,5 bis etwa 3,0 Gew.-% zugegeben.

Die glykolytische Spaltung der polyurethanhaltigen Kunststoffe wird in der Regel solange durchgeführt, daß eine fließfähige, aminhaltige, mindestens ein Polyol enthaltende Zusammensetzung erhalten wird. Vorteilhafterweise liegt die Viskosität der aminhaltigen, mindestens ein Polyol enthaltenden Zusammensetzung bei bis zu etwa 8000 mPas (gemessen mit Rotationsviskosimeter bei 25°C). Gegebenenfalls kann die Viskosität durch Zugabe von Verdünnern, vorzugsweise von Reaktivverdünnern, insbesondere von mehrwertigen, niedermolekularen Alkoholen beeinflußt werden. Als Reaktivverdünner sind beispielsweise handelsübliche Polyole geeignet, die im Hinblick auf die unter Einsatz der Polyolzubereitung in Polyurethanen zu erzielenden Eigenschaften ausgewählt werden.

Die nach der erfindungsgemäßen Deaminierung erhältliche Polyolzubereitung weist in der Regel eine Viskosität auf, deren Wert in der Regel bis zu etwa 40% über dem Wert der mindestens ein Polyol enthaltenden Zusammensetzung liegt. Es ist bevorzugt, wenn die Viskosität der Polyolzubereitung einen Wert von etwa 10.000 mPas nicht überschreitet. Vorzugsweise weist die Polyolzubereitung eine Viskosität von etwa 1500 mPas bis etwa 8000 mPas auf.

Als Isocyanate zur Durchführung des erfindungsgemäßen Verfahrens geeignet sind Isocyanate mit mindestens zwei Isocyanatgruppen, wobei die Isocyanatgruppen ausschließlich sekundär und/oder tertiär aliphatisch gebunden sind.

Bevorzugt ist es, im Rahmen der vorliegenden Erfindung mindestens ein Isocyanat der allgemeinen Formel I 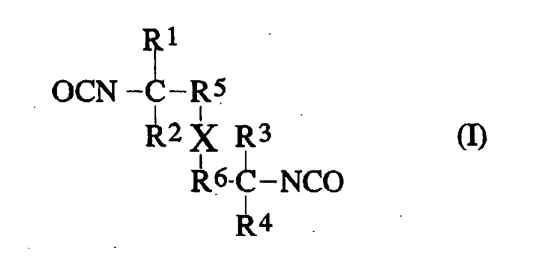 einzusetzen, wobei X für eine lineare oder verzweigte, gesättigte oder ungesättigte Alkylengruppe mit etwa 4 bis etwa 8 C-Atomen oder für ein ggf. aliphatisch, aromatisch oder mit Heteroatomen substituiertes, aromatisches oder cycloaliphatisches Ringsystem steht, R¹, R², R³ und R⁴ unabhängig voneinander für H oder C₁₋₆-Alkyl und R⁵ und R⁶ unabhängig voneinander für C₁₋₄-Alkyl stehen.

Besonders bevorzugt ist es, wenn jeweils zwei der Restepaare R¹ und R³ sowie R² und R⁴ paarweise verschieden für Wasserstoff und jeweils eine C₁₋₄-Alkylgruppe stehen.

Ein Beispiel für ein erfindungsgemäß einsetzbares Isocyanat ist Bis-1,3(2-isocyanatopropyl)benzol, auch unter der Bezeichnung m-Tetramethylxylylendiisocyanat (TMXDI) bekannt (CAS-NR. 002778-42-9).

Zur Durchführung der erfindungsgemäßen glykolytischen Spaltung von polyurethanhaltigen Kunststoffen werden die Kunststoffe üblicherweise zunächst zerkleinert, es können jedoch auch unzerkleinerte polyurethanhaltige Kunststoffe der glykolytischen Spaltung unterworfen werden.

Das erfindungsgemäße Verfahren ist nicht ausschließlich, aber insbesondere für polyurethanhaltige Kunststoffe geeignet, die unter Verwendung von Methylendiphenyldiisocyanat (MDI) oder Toluylendiisocyanat (TDI) oder MDI und TDI hergestellt wurden.

Besonders geeignet ist die glykolytische Spaltung bei der Aufarbeitung von polyurethanhaltigen Kunststoffen, wie sie beispielsweise bei der Demontage von Altautomobilen anfallen, z. B. bei der Aufarbeitung von Karosserieteilen, Armaturenbrettern und Automobilsitzen, aber auch von Produktionsabfällen aus der Herstellung von Hart-, Weich-, Integral- und Blockschaumstoffen.

Mit den nach dem erfindungsgemäßen Verfahren deaminierten Polyolzubereitungen lassen sich anschließend wieder Polyurethane herstellen. Die Polyolzubereitungen sind beliebig lagerfähig, die Polyurethanherstellung kann also sowohl direkt im Anschluß an die Deaminierung als auch nach einer längeren Aufbewahrungszeit erfolgen.

Gegenstand der Erfindung ist damit auch die Verwendung einer Polyolzubereitung, hergestellt oder behandelt nach einem der erfindungsgemäßen Verfahren, zur Herstellung von Polyurethanen.

Die Erfindung wird nachfolgend anhand von Beispielen näher erläutert, die jedoch keine Beschränkung des Erfindungsgegenstandes darstellen.

### BEISPIELE

Als polyurethanhaltiger Kunststoff wurde bei allen Versuchen Polyurethanabfall von Polyurethan herstellenden und verarbeitenden Betrieben eingesetzt.

Der polyurethanhaltige Kunststoff wurde in einem Schneidgranulator auf eine dosierbare Größe vorzerkleinert und ohne weitere Behandlung der glykolytischen Spaltung unterworfen.

In einem mit Rührer, Tropftrichter, Thermometer und Rückflußkühler versehenen Kolben wurde das für die glykolytische Spaltung eingesetzte Glykol vorgelegt und mit 0,1 Gew.-% Dibutylzinndilaurat als Katalysator, berechnet auf den Gesamtansatz, versetzt.

Nach Aufheizen des Glykols auf etwa 210°C wurde der polyurethanhaltige Kunststoff so zugegeben, daß der Kolbeninhalt rührfähig und die Temperatur konstant blieb. Nach Abschluß der Zugabe wurde die Reaktionstemperatur von 210°C für etwa zwei Stunden beibehalten. Anschließend wurde auf die in der Tabelle 1 angegebene Reaktionstemperatur abgekühlt, TMXDI zugegeben und während der in Tabelle 1 angegebenen Reaktionszeit gerührt. Nach Abschluß der Reaktion wurde die. Polyolzubereitung abgekühlt und analysiert.

Die Charakterisierung der Polyolzubereitung erfolgte durch Bestimmung der OH-Zahl (titrimetisch), der Viskosität bei 25°C (Rotationsviskosimeter) und des Gehaltes an primären Aminen (Hochdruckflüssigchromatographie, HPLC).

Die folgenden Tabellen zeigen die eingesetzten Rohstoffe, die Reaktionsbedingungen und die Resultate.

Beispiele V1, V3, V5 und V7 sind Vergleichsbeispiele ohne Zusatz von TMXDI.

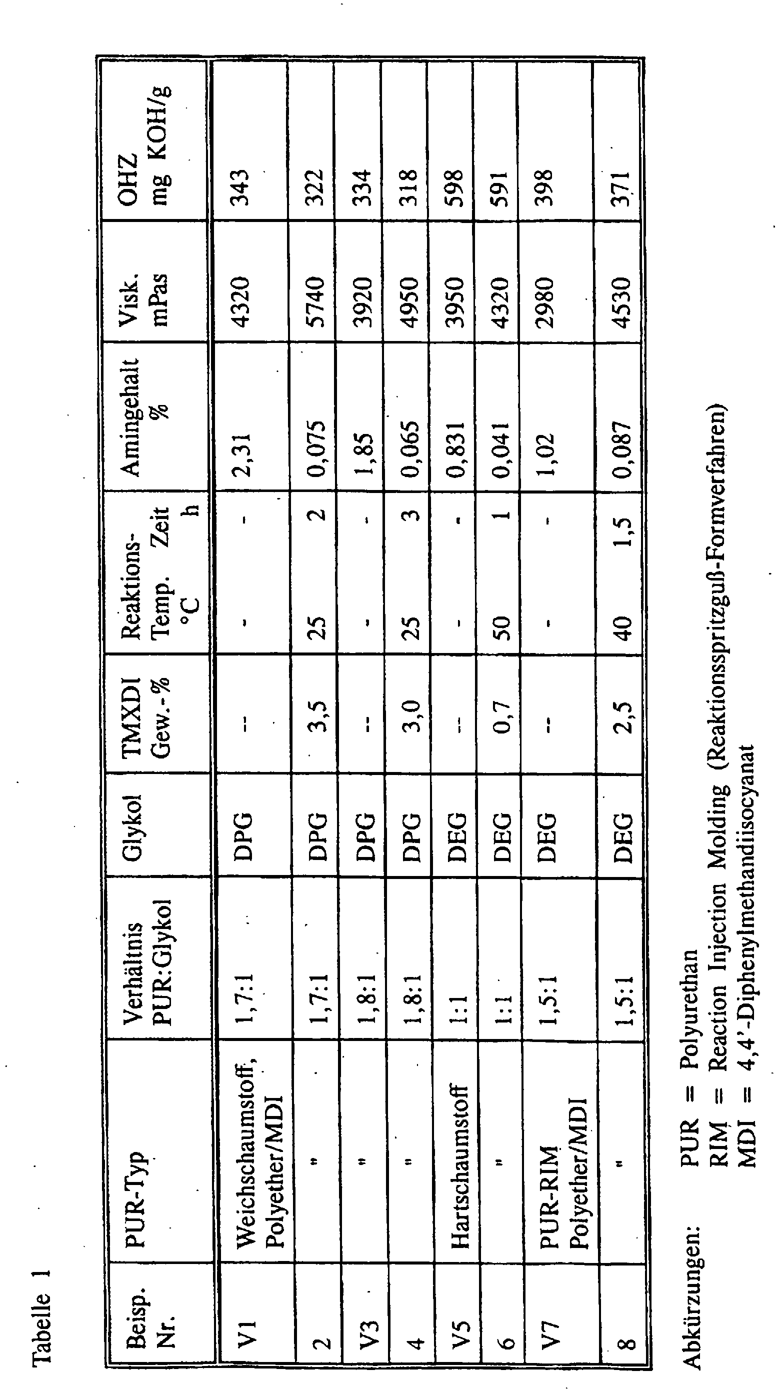

## Patentansprüche

1. Verfahren zur Verringerung des Gehalts einer mindestens ein Polyol enthaltenden Zusammensetzung an primären Aminen, bei dem eine mindestens ein Polyol enthaltende Zusammensetzung mit mindestens einem Isocyanat versetzt wird, das ausschließlich sekundäre oder tertiäre oder sekundäre und tertiäre, aliphatisch gebundene Isocyanatgruppen aufweist, wobei das mindestens eine Isocyanat in einer Menge von bis zu 5 Gew.-%, bezogen auf die gesamte Zusammensetzung, zugegeben wird und eine Polyolzubereitung erhalten wird.

2. Verfahren nach Anspruch 1, dadurch gekennzeichnet, daß ein Isocyanat der allgemeinen Formel I 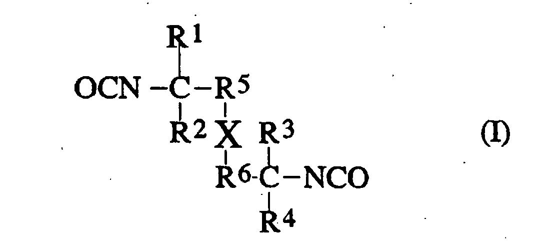 wobei X für eine lineare oder verzweigte, gesättigte oder ungesättigte Alkylengruppe mit 4 bis 8 C-Atomen oder für ein gegebenenfalls aliphatisch, aromatisch oder mit Heteroatomen substituiertes, aromatisches oder cycloaliphatisches Ringsystem steht, R¹, R², R³ und R⁴ unabhängig voneinander für H oder C₁₋₆-Alkyl und R⁵ und R⁶ unabhängig voneinander für C₁₋₄-Alkylen stehen.

3. Verfahren nach Anspruch 2, dadurch gekennzeichnet, daß jeweils zwei der Restepaare R¹ und R³ sowie R² und R⁴ paarweise verschieden für Wasserstoff oder jeweils eine C₁₋₄-Alkylgruppe stehen.

4. Verfahren nach einem der vorstehenden Ansprüche, dadurch gekennzeichnet, daß als Isocyanat Bis-1,3(2-isocyanatopropyl)benzol (TMXDI) eingesetzt wird.

5. Verfahren nach einem der vorstehenden Ansprüche, dadurch gekennzeichnet, daß die mindestens ein Polyol enthaltende Zubereitung einen Gehalt an aus Polyurethan enthaltenden Kunststoffen gewonnenem Polyol aufweist.

6. Verfahren nach einem der vorstehenden Ansprüche, dadurch gekennzeichnet, daß die mindestens ein Polyol enthaltende Zubereitung durch glykolytische Spaltung von Polyurethan enthaltenden Kunststoffen gewonnen wurde.

7. Verfahren nach einem der vorstehenden Ansprüche, dadurch gekennzeichnet, daß das Isocyanat in einer Menge von 0,1 bis 5 Gew.-%, bezogen auf die mindestens ein Polyol enthaltende Zubereitung, zugegeben wird.

8. Verfahren zur Herstellung einer Polyolzubereitung aus einem polyurethanhaltigem Kunststoff, bei dem ein polyurethanhaltiger Kunststoff mit einem Polyol oder einem Gemisch aus zwei oder mehr Polyolen versetzt und bei einer Temperatur von 180 bis 250°C, gegebenenfalls in Gegenwart eines Katalysators zu einer mindestens ein Polyol enthaltenden Zubereitung umgesetzt und nach einer Reaktionszeit von 0,5 bis 12h auf eine Temperatur von 20 bis 80°C abgekühlt wird, dadurch gekennzeichnet, daß anschließend die mindestens ein Polyol enthaltende Zubereitung mit mindestens einem Isocyanat versetzt wird, das ausschließlich sekundäre oder tertiäre oder sekundäre und tertiäre, aliphatisch gebundene Isocyanatgruppen aufweist, wobei das mindestens eine Isocyanat in einer Menge von bis zu 5 Gew.-%, bezogen auf die gesamte Zusammensetzung, zugegeben wird und eine Polyolzubereitung erhalten wird.

9. Verwendung einer Polyolzubereitung, behandelt nach einem Verfahren gemäß einem der Ansprüche 1 bis 7 oder hergestellt nach Anspruch 8, zur Herstellung von Polyurethanen.

## Claims

1. A process for reducing the primary amine content of a composition comprising at least one polyol, wherein a composition comprising at least one polyol is admixed with at least one isocyanate which contains only secondary or tertiary or secondary and tertiary, aliphatically bound isocyanate groups, where the isocyanate(s) is/are added in an amount of up to 5 % by weight, based on the total composition, and a polyol preparation is obtained.

2. A process as claimed in claim 1, wherein use is made of an isocyanate of the formula (I) 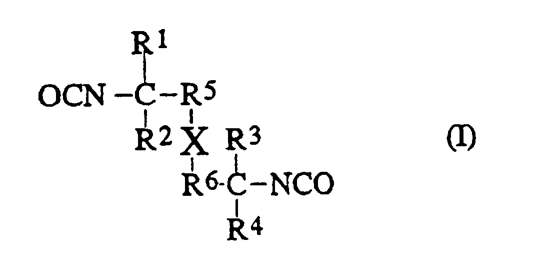 where X is a linear or branched, saturated or unsaturated alkylene group having 4 to 8 carbon atoms or an unsubstituted, aliphatically substituted, aromatically substituted or heteroatom-substituted aromatic or cycloaliphatic ring system, R¹, R², R³ and R⁴ are, independently of one another, H or C₁-C₆-alkyl and R⁵ and R⁶ are, independently of one another, C₁-C₄-alkylene.

3. A process as claimed in claim 2, wherein the radical pair R¹, R³ is different from the radical pair R², R⁴ and each pair is either a pair of hydrogen atoms or a pair of C₁-C₄-alkyl groups.

4. A process as claimed in any of the preceding claims, wherein 1,3-bis(2-isocyanatopropyl)benzene (TMXDI) is used as isocyanate.

5. A process as claimed in any of the preceding claims, wherein the composition comprising at least one polyol comprises a polyol obtained from polyurethane-containing plastics.

6. A process as claimed in any of the preceding claims, wherein the composition comprising at least one polyol has been obtained by glycolytic cleavage of polyurethane-containing plastics.

7. A process as claimed in any of the preceding claims, wherein the isocyanate is added in an amount of from 0.1 to 5 % by weight, based on the composition comprising at least one polyol.

8. A process for preparing a polyol preparation from a polyurethane-containing plastic, in which a polyurethane-containing plastic is admixed with a polyol or a mixture of two or more polyols and is reacted at from 180 to 250EC, in the presence or absence of a catalyst, to give a composition comprising at least one polyol and, after a reaction time of from 0.5 to 12 hours, cooled to from 20 to 80EC, wherein the composition comprising at least one polyol is subsequently admixed with at least one isocyanate which contains only secondary or tertiary or secondary and tertiary, aliphatically bound isocyanate groups, where the isocyanate(s) is/are added in an amount of up to 5 % by weight and a polyol preparation is obtained.

9. Use of a polyol preparation treated by a process as claimed in any of claims 1 to 7 or prepared as claimed in claim 8 for producing polyurethanes.

## Revendications

1. Procédé d'abaissement de la teneur en amines primaires d'une composition contenant au moins un polyol, dans lequel une composition contenant au moins un polyol est mélangée à au moins un isocyanate présentant exclusivement des groupes isocyanate secondaires ou tertiaires ou secondaires et tertiaires, aliphatiquement liés, le au moins un isocyanate étant ajouté en quantité jusqu'à 5% en poids, par rapport au total de la composition, et avec obtention d'une .

2. Procédé selon la revendication 1, caractérisé en ce que l'on met en oeuvre un isocyanate de la formule générale I 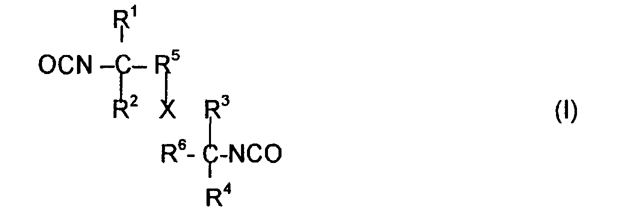 dans laquelle X représente un radical alkylène linéaire ou ramifié, saturé ou insaturé, comportant de 4 à 8 atomes de carbone, ou un système de noyau éventuellement aliphatique, aromatique ou substitué avec des hétéroatomes, aromatique ou cycloaliphatique, R¹, R², R³ et R⁴ représentent indépendamment les uns des autres H ou un radical alkyle en C₁ à C₆, et R⁵ et R⁶ représentent indépendamment l'un de l'autre un radical alkylène en C₁ à C₄.

3. Procédé selon la revendication 2, caractérisé en ce qu'à chaque fois deux des paires de restes R¹ et R³, R² et R⁴ diffèrent par deux et représentent l'hydrogène et à chaque fois un radical alkyle en C₁ à C₄.

4. Procédé selon l'une des revendications qui précèdent, caractérisé en ce que l'isocyanate utilisé est du bis-1,3(2-isocyanatopropyl)benzène (TMXDI).

5. Procédé selon l'une des revendications qui précèdent, caractérisé en ce que la préparation contenant au moins un polyol présente une fraction de polyol obtenu à partir de plastiques contenant du polyuréthanne.

6. Procédé selon l'une des revendications qui précèdent, caractérisé en ce que la préparation contenant au moins un polyol a été obtenue par décomposition glycolytique de plastiques contenant du polyuréthanne.

7. Procédé selon l'une des revendications qui précèdent, caractérisé en ce que l'isocyanate est ajouté à raison de 0,1 à 5% en poids, par rapport à la composition contenant au moins un polyol.

8. Procédé de production d'une préparation contenant du polyol à partir d'un plastique polyuréthannique, dans lequel un plastique polyuréthannique est mélangé à un polyol ou à un mélange de deux ou plus de deux polyols et converti, à une température de 180°C à 250°C, éventuellement en présence d'un catalyseur, en une composition aminée contenant au moins un polyol et, après un temps de réaction de 0,5 à 12 heures, refroidi à une température de 20 à 80°C, caractérisé en ce que la composition contenant au moins un polyol est ensuite mélangée à au moins un isocyanate présentant exclusivement des groupes isocyanate secondaires ou tertiaires, ou secondaires et tertiaires, aliphatiquement liés, où le au moins un isocyanate est ajouté en quantité jusqu'à 5% en poids, avec obtention d'une préparation contenant du polyol.

9. Utilisation d'une préparation ce polyol, traitée par un procédé selon l'une des revendications 1 à 7, pour la préparation de polyuréthannes.
